**Europäisches Patentamt**

(19) **European Patent Office**

**Office européen des brevets**

(11) Publication number : **0 403 549 B1**

(12) # EUROPEAN PATENT SPECIFICATION

(45) Date of publication of patent specification :
**14.10.92 Bulletin 92/42**

(51) Int. Cl.⁵ : **A01J 7/00**

(21) Application number : **89903836.8**

(22) Date of filing : **17.02.89**

(86) International application number :
**PCT/SE89/00069**

(87) International publication number :
**WO 89/08384 21.09.89 Gazette 89/23**

(54) **A MILKING MACHINE AND A METHOD OF MILKING BY MEANS OF THE SAME.**

(30) Priority : **11.03.88 SE 8800893**

(43) Date of publication of application :
**27.12.90 Bulletin 90/52**

(45) Publication of the grant of the patent :
**14.10.92 Bulletin 92/42**

(84) Designated Contracting States :
**DE GB NL SE**

(56) References cited :
**DK-A- 124 442**
**DK-A- 125 502**
**SE-A- 348 092**
**SE-B- 453 875**

(73) Proprietor : **ALFA-LAVAL AGRI INTERNATIONAL AB**
**Farm Center P.O. Box 39**
**S-147 00 Tumba (SE)**

(72) Inventor : **PETTERSSON, Torbjörn Rosenhed**
**D-154 00 Gnesta (SE)**
Inventor : **ÖRNERFORS, Benny Styrbjörnsvägen 8?l**
**S-126 51 Hägersten (SE)**

(74) Representative : **Lerwill, John et al**
**A.A. Thornton & Co. Northumberland House**
**303-306 High Holborn**
**London, WC1V 7LE (GB)**

## Description

The present invention relates to a milking machine comprising at least one teat cup containing a liner for receiving a teat, which liner has an interior milk conducting part and forms with the surrounding wall of the teat cup a pulsation chamber between the teat cup and the liner, and means for subjecting the milk conducting part of the interior of each liner to a pressure lower than atmospheric pressure, and for subjecting each pulsation chamber to a pulsating pressure varying between a low and a high pressure, which high pressure is higher than the pressure in the interior of each liner. Further, the milking machine comprises means for controlling the respective pressures in the interior of the liner and in the pulsation chamber of each teat-cup, means for indicating the size of the milk flow. During milking the milk flows from the teats in a flow which during an initial first phase of the milking increases to a main flow, during a second phase of the milking remains at said main flow, and during a terminating third phase of the milking decreases from the main flow. The invention also relates to a method of milking by means of such a milking machine.

Milking machines of this kind are disclosed in US 3 754 532 and GB 1 506 636.

The known milking machine according to US 3 754 532 is arranged to keep the low pressure in each pulsation chamber and the pressure in the interior of each liner, i.e. in the milk conducting part of each liner, substantially higher when the milk flow is less than a predetermined relatively small value than when the milk flow exceeds this flow value. When milking with this machine the teats are subjected to weaker suction forces more gentle on the teats during the first milking phase before the milk has started flowing through the teats and during the third milking phase when the milk flow has ceased, than when the milk flows through the teats in a flow exceeding said small value. This is to advantage, since a teat is considerably more sensitive to external influences when it is empty than when milk is flowing through it. Hereby the risk of injuring the teats is decreased.

The known milking machine according to GB 1 506 636 operates in a similar way as the machine according to US 3 754 532 but is arranged to keep only the low pressure in each pulsation chamber substantially higher when the milk flow during milking is below a predetermined relatively small value, than when the milk flow exceeds this value. Hereby, each liner does not open completely during the pulsating pressure in each pulsation chamber when the milk flow is below said small value, which results in that only the tip of each teat is subjected to suction forces while the rest portion of each teat is protected against these.

Thus, the above described known milking machines aim at more careful treatment of the teats during so called dry milking of the latter, i.e. when there is no milk flowing through the teats. However, these known machines do not solve the problem of preventing crawling of the teat cups on the teats during the third milking phase when the milk flow ceases.

During the second milking phase each teat is distended and is in a firm friction engagement with the liner, so that the teat cup is in an intended position on the teat. However, when the milk flow decreases during the third milking phase each teat becomes slacker and slacker and its frictional engagement with the liner weaker and weaker, whereby the teat tends to be sucked deeper into teat cup. Thus, each teat cup tends to crawl up the teat toward the udder and thereby cause throttling of the milk conducting interior of the teat close to the udder, so that the milking is made more difficult and the milk flow finally completely ceases in spite of the fact that some milk still remains in the udder.

The object of the present invention is to provide a milking machine, and a methd of milking by means of which the problem of crawling of each teat cup when the milk flow decreases during milking is averted.

According to the invention there is provided a milking machine of the kind initially stated, characterized in that the pressure control means are adapted to control the various pressures in response to the flow indication means indicating during said third milking phase that the milk flow has decreased to a predetermined fraction of the main flow, such that the low pressure in each pulsation chamber is higher than the pressure in each liner, at least during a part of the third milking phase. Hereby, each liner will open only partly during said part of the third milking phase when the low pressure prevails in each pulsation chamber, which secures the advantage that the pressure of each liner against its teat will be stronger than that of a completely opened liner, so that the frictional engagement of each liner with its teat will be stronger, whereby crawling of each teat cup is counteracted. Because of said stronger pressure of each liner against its teat it is true that the teat canal at the tip of the teat will be somewhat throttled, but this will only result in that the milk flow decreases somewhat so that the milking time is prolonged insignificantly. The main result is that crawling of each teat cup is prevented so that the udder is completely emptied.

Another advantage with the milking machine according to the invention is that the risk of having a so called impact is decreased. Impact means that small milk droplets are sucked backwards at high velocity into the liner when this opens. Such small milk droplets of a high velocity can penetrate the teat canal and give rise to infections. Since according to the invention each liner is opened only partly during the pulsation, the resulting momentary pressure reduction in the liner below the tip of its teat is decreased, so that milk droplets flowing backwards cannot obtain the same high velocity as in a completely opening liner. Thus, the risk of small milk droplets penetrating the teat canal of each teat is reduced.

Yet another advantage with the milking machine according to the invention is that the teat cups can be lighter than conventional teat cups, which facilitates the manual handling of the teat cups when applying and removing them, without increasing the risk of crawling of the teat cups during milking. A conventional teat cup is usually made excessively heavy to present crawling. With the invention the risk of the conventional heavy teat cup falling off the teat during milking is decreased.

A further advantage with the milking machine according to the invention is that when using it for milking of e.g. a cow the teats of the cow are treated more carefully than when milking by means of the previously described known milking machines. At least one of the teats of a cow usually terminates yielding earlier milk than the other teats. The first mentioned teat will therefore be dry-milked in an injurious way at least until the other teats terminate to yield milk. By means of the new milking machine such an injuriously dry milking of a teat can be avoided by controlling the liners to open only partly when the milk flow has decreased to a predeterminated fraction of the main flow, e.g. corresponding to about full flow from three of the four teats of the cow. Thus, at occurrence of dry-milking of at least one of the teats the liners will only open partly, whereby all of the teats are treated carefully.

By the expression "main flow" is intended a flow, the average value of which during a plurality of pulsation cycles does not substantially deviate from a maximum flow value indicated by the indication means. The size of the main flow usually differs from one animal to another and from one milking occasion to another. However, the above described advantages with the milking machine according to the invention are obtained independently of how big the main flow is at a certain milking occasion, since during the third milking phase the pressure control means are only adapted to control the pressure relation between the interior of each liner and each pulsation chamber in response to the indicating means indicating the size of the milk flow relative to the size of the main flow.

The pressure control means mag be adapted to control either only the low pressure in each pulsation chamber, or only the pressure in each liner, or both of these pressures. However, the pressure control means are suitably adapted to increase the low pressure in each pulsation chamber in response to the indication means indicating during the third milking phase that the milk flow has decreased to said predetermined fraction of the main flow, such that said low pressure exceeds the pressure in each liner.

Preferably, in response to the indication means the pressure control means are in a way known per se adapted to adjust the low pressure in each pulsation chamber during the first milking phase to a first value, when the milk flow from the teats is below a predetermined relatively small flow, and to a second value, when the milk flow at least amounts to said small flow, and during the second milking phase to maintain the low pressure in each pulsation chamber at said second value. In addition, the pressure control means are adapted to maintain the pressure in each liner at a predetermined value at least during the second milking phase and during said part of the third milking phase, which predetermined value of the pressure in each liner is lower than said first value and higher than or equal to said second value. Conveniently the pressure control means are adapted to adjust the low pressure in each pulsation chamber to said first value in response to the indication means indicating during the third milking phase that the milk flow has decreased to said predetermined fraction of the main flow.

According to an embodiment of the milking machine according to the invention the pressure control means comprise a first adjusting device for adjusting the pressure in each liner, a second adjusting device for adjusting the low pressure in each pulsation chamber, and a control unit connected to the adjusting devices and the indicating means for controlling the adjusting devices in response to indications from the indication means.

The indication means is suitably constituted by a flow sensing device.

The invention also provides a method of milking by means of the a milking machine as initially described characterized in that during said third milking phase, when the milk flow has decreased to a predetermined fraction of the main flow, the low pressure in each pulsation chamber is kept higher than the pressure in each liner, during at leat a part of the third milking phase.

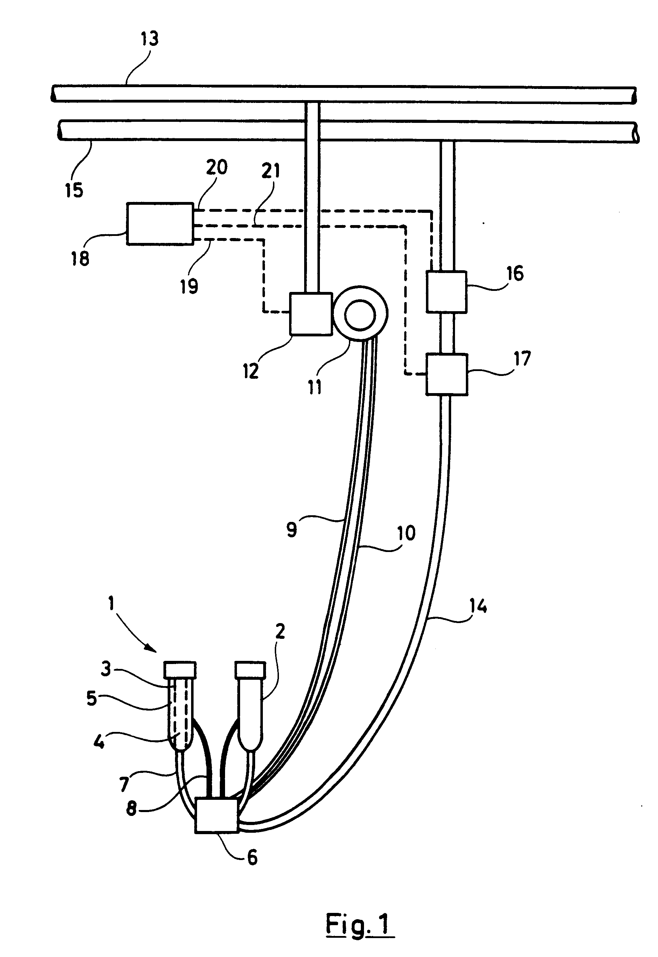

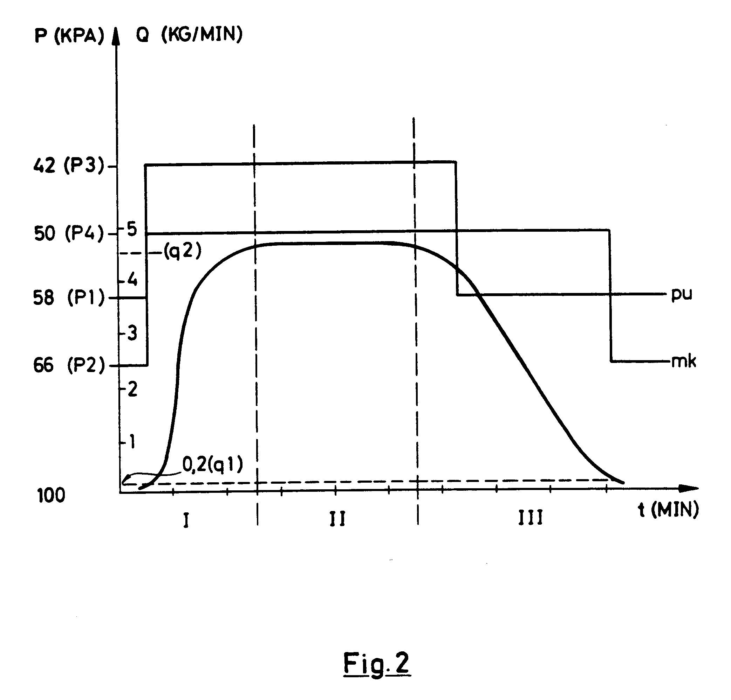

The invention will has be described in more detail with reference to the accompanying drawings, in which figure 1 shows an embodiment of the milking machine according to the invention, and figure 2 is a graphic representation showing milk flow Q (kg/min) plotted against t, and the pressure P (kPa) in the liners and the pulsation chambers, respectively, also plotted against t (minute) during milking by means of the milking machine according to figure 1. The low pressure in the pulsation chamber is represented by the graph pu and the pressure in the liner by the graph mk.

The milking machine shown in figure 1 comprises a milking means 1 with four teat cups 2, in which liners 3 are mounted (only two teat cups are shown). Each liner 3 has an interior milk conducting part 4 and forms with the surrounding wall of the teat cup 2 a pulsation chamber 5 between the teat cup 2 and the liner 3. A teat cup claw 6 is connected to the liners via short milk tubes 7 which communicate with the interior of the liners, and to the teat cup 2 via short pulsation tubes 8 which communicate with the pulsation chambers. Via the teat cup claw 6 the short pulsation tubes 8 are connected in pairs with respective pulsation tubes 9 and 10 extending upwards from the teat cup claw 6 to the pulsator 11, which is adapted to reduce the pressure alternately in the respective pulsation chambers of the pair of teat cups. Via an adjusting device 12 for adjusting the pressure in the pulsator, the pulsator is connected to a conduit 13, the interior of which is subjected to a subpressure produced by a vacuum source not shown.

Via the teat cup claw 6 all of the short milk tunes 7 are connected to a long milk tube 14 extending upwards from the teat cup claw 6 to a milk conduit 15, the interior of which communicates with the vacuum source not shown. In the long milk conduit 14 there is an adjusting device 16 for adjusting the pressure in the conduit 14 and a flow sensing member 17 for sensing the milk flow.

A control unit 18 is connected to the adjusting devices 12, 16 and the flow sensing member 17 through respective control lines 19, 21 for controlling the adjusting device 12, 16 in response to sensings from the flow sensing member 17.

The milking machine is operated in the following way:

The teat cup 2 are applied to e.g. a cow to be milked. At the beginning of the milking, during a first phase I, the control unit 18 controls the adjusting device 12 so that the pulsator supplies the pulsation chambers 5 with a pulsating pressure varying between a low pressure p1 of 58 58 kPa and a high pressure of 100 kPa, i.e. the atmospheric presssure (fig. 2). The pressure in the pulsation chambers pulsates at a frequency of about 1 pulse/second. At the same time the control unit 18 controls the adjusting device 16 so that the pressure in the milk conducting parts 4 of the liners are kept at a value p2 of 66 kPa, i.e. higher than the low pressure p1 in the pulsation chambers 5. Hereby, it is secured that the liners 3 are opened completely during the pulsations, whereby the start up of the milk flow through the teats is facilitated.

When the milk flow reaches a relatively small value q1 of about 0.2 kg/min., which is detected by the flow sensing member 17, the control unit 18 controls the adjusting devices 12 and 16, so that the low pressure in the pulsation chambers 5 is decreased to a value p3 of 42kPa, while the pressure in the liners 3 is decreased to a value p4 of 50 kPa, i.e. to a value which is higher than the value of the low pressure in the pulsation chambers 5, which secures a complete opening of the liners during the pulsations. In addition to this, the liners are opened relatively fast when each liner is subjected to a pressure difference of 8 kPa between the interior of the liner and the pulsation chamber during each pulsation, which results in a milk flow of a relatively long duration during each pulsation when the liners are open. How the milk flow increases rapidly to a main flow, the size q2 of which here is supposed to be about 4.5 kg/min. in average. The size of the main flow differs usually from one animal to another . Then, a second phase II of the milking ensues, during which said main flow prevails and the main part of the milk in the udder of the cow is extracted. During phase II the control unit 18 registers the size q2 of the main flow.

After phase II of the milking a third phase III ensues, during which the milk flow decreases from the main flow. When the main flow during phase III has decreased to a predetermined fraction (here 90 %) of the size of the main flow, the control unit 18 controls the adjusting device 12 so that the low pressure in the pulsation chambers 5 is increased from 42 kPa (p3) to 58 kPa (p1), i.e. to a value which is higher than the value of the pressure in the liners. Hereby the liners are not completely opened during the pulsations, whereby the friction at engagement of the liners with the teats will be stronger.

When the milk flow during phase III has decreased to said relatively small value q1 of about 0.2 kg/min. the control unit 18 controls the adjusting device 16 so that the pressure in the liners is increased from 50 kPa (p4) to 66 kPa (p2). By this the liners are completely opened during the pulsations, so that the rest of the milk easily can be milked out of the udder and the liners thereafter easily can be removed from the teats manually or by means of an automatic removing device.

## Claims

1. A milking machine comprising at least one teat cup (2) containing a liner (3) for receiving a teat, which liner has an interior milk conducting part (4) and forms with the surrounding wall of the teat cup a pulsation chamber (5) between the teat cup and the liner, means (6-8, 9-11, 13-15) for subjecting the milk conducting part of the interior of each liner to a pressure lower than the atmospheric pressure, and for subjecting each pulsation chamber to a pulsating pressure varying between a low and a high pressure, which high pressure is higher than the pressure in the interior of each liner, means (12, 16, 18) for controlling the respective pressures in the interior of the liner and in the pulsation chamber of each teat cup, and a means (17) for indicating the milk flow, during milking the milk flow from the teats increasing during an initial first phase (I) of the milking to a main flow, remaining at the main flow during a second phase (2) of the milking and decreasing from the main flow during a terminating third phase (III) of the milking, **characterized in** that said pressure control means (12, 16, 18) are adapted to control the various pressures in response to the flow indications means (17) indicating during said third milking phase (III) that the milk flow has decreased to a predetermined fraction of the main flow, such that the low pressure in each pulsation chamber (5) is higher than the pressure in each liner (3), at least during a part of the third milking phase (III).

2. A milking machine according to claim 1, wherein the pressure control means (12, 16, 18) are adapted to increase the low pressure in each pulsation chamber (5) in response to the indication means (17) indicating during the third milking phase (III) that the milk flow has decreased to said predetermined fraction of the main flow, such that said low pressure exceeds the pressure in each liner (3).

3. A milking machine according to claim 2, wherein response to the indication means (17) the pressure control means (12, 16, 18) are adapted to adjust the low pressure in each pulsation chamber (5) during the first milking phase (I) to a first value (p1) when the milk flow from the teats is below a predetermined relatively small flow (q1), and to a second value (p3) when the milk flow at least amounts to said small flow (q1), and to maintain the low pressure in each pulsation chamber at said second value (p3) during the second milking phase (II), the pressure control means being adapted to maintain the pressure in each liner at a predetermined value (p4) at least during the second milking phase (II) and during said part of the third milking phase (III), which predetermined value (p4) of the pressure in each liner is lower than said first value (p1) and higher than or equal to said second value (p3), and the pressure control means (12, 16, 18) are adapted to adjust the low pressure in each pulsation chamber to said first (p1) in response to the indication means (17) indicating during the third milking phase (III) that the milk flow has decreased to said predetermined fraction (q2) of the main flow.

4. A milking machine according to any one of claims 1-3 wherein the pressure control means comprise a first adjusting device (16) for adjusting the pressure in each liner (3), a second adjusting device (12) for adjusting the low pressure in each pulsation chamber (5), and a control unit (18) connected to the adjusting devices and the indication means for controlling the adjusting devices in response to indications from the indication means.

5. A milking machine according to any one of claims 1-4, wherein the indication means is constituted by a flow sensing device (17).

6. A method of milking by means of a milking machine comprising at least one teat cup (2) containing a liner (3) for receiving a teat, which liner has an Interior milk conducting part (4) and forms with the surrounding wall of the teat cup a pulsation chamber (5) between the teat cup and the liner, which pulsation chamber during milking is subjected to a pulsating pressure varying between a low pressure and a high pressure, while the milk conducting part of the Interior of the liner is constantly subjected to a pressure, which is lower than the atmospheric pressure and lower than said high pressure in the pulsation chamber, during milking the milk flow from the teats increasing during an initial first phase (I) of the milking to a main flow remaining at the main flow during a second phase (II) of the milking, and decreasing from the main flow during a terminating third phase (III) of the milking **characterized in** that during said third milking phase (III), when the milk flow has decreased to a predetermined fraction (q2) of the main flow the low pressure in each pulsation chamber (5) is kept higher than the pressure in each liner, at least during a part of the third milking phase (3).

7. A method according to claim 6, wherein the low pressure in each pulsation chamber (5) is lower than or equal to the pressure in each liner at least during the second phase (II), and during the third milking phase (III), when the milk flow has decreased to said predetermined fraction (q2) of the main flow, the low pressure in each pulsation chamber (5) is increased so that it exceeds the pressure in each liner.

8. A method according to claim 7, wherein the low pressure in each pulsation chamber (5) during the first milking phase (I) is kept at a first value (p1), when the milk flow is below a predetermined relatively small flow (q1), and is adjusted to a second value (p3), when the milk flow has increased to said small flow (q1), and during the second milking phase (II) is maintained at said second value (p3), the pressure in each liner (3) is kept at a predetermined value (p4) at least during the second milking phase (II) and during said part of the third milking phase (III), which predetermined value (p4) of the pressure in each liner is less than said first value (p1) and greater or equal to said second value (p3), and during the third milking phase (III), when the milk flow has decreased to said predetermined fraction (q2) of the main flow, the low pressure in each pulsation chamber (5) is adjusted to said first value (p1).

## Patentansprüche

1. Melkmaschine mit mindestens einem Zitzenbecher (2), der eine Auskleidung (3) zur Aufnahme einer Zitze enthält, wobei die Auskleidung einen inneren milchleitenden Teil (4) aufweist und mit der umgebenden Wandung des Zitzenbechers zusammen zwischen dem Zitzenbecher und der Auskleidung eine Pulsierkammer (5) bildet, Einrichtungen (6-8, 9-11, 13-15), um den milchleitenden Teil des Inneren jeder Auskleidung mit unteratmosphärischem Druck und jede Pulsierkammer mit einem pulsierenden, zwischen einem niedrigen und einem hohen Wert variierenden Druck zu beaufschlagen, welcher höhere Druck höher als der Druck im Inneren jeder Auskleidung ist, einer Einrichtung (12, 16, 18) zum Steuern der Drücke im Innern der Auskleidung und in der Pulsierkammer jedes Zitzenbechers und einer Einrichtung (17) zum Melden der Milchströmung, wobei beim Melken der Milchfluß aus den Zitzen in einer anfänglichen ersten Melkphase (I) auf eine Hauptströmung zunimmt, während einer zweiten Melkphase (II) auf der Hauptströmung verbleibt und von dieser aus während einer abschließenden dritten Melkphase (III) abnimmt, **dadurch gekennzeichnet**, daß die Drucksteuereinrichtungen (12, 16, 18) die verschiedenen Drücke ansprechend darauf steuern können, daß die Strömungsmeldeeinrichtung (17) während der dritten Melkphase (III) meldet, daß der Milchfluß auf einen vorbestimmten Anteil der Hauptströmung abgefallen ist, so daß mindestens während eines Teils der dritten Melkphase (III) der niedrige Druck in jeder Pulsierkammer (5) höher als der Druck in jeder Auskleidung (3) ist.

2. Melkmaschine nach Anspruch 1, bei der die Drucksteuereinrichtung den niedrigen Druck in jeder Pulsierkammer (5) steigern kann, wenn die Meldeeinrichtung (17) in der dritten Melkphase (III) meldet, daß der Milchfluß auf den vorbestimmten Anteil der Hauptströmung abgefallen ist, so daß der niedrige Druck den Druck in jeder Auskleidung (3) übersteigt.

3. Melkmaschine nach Anspruch 2, bei der ansprechend auf die Meldeeinrichtung (17) die Drucksteuereinrichtung (12, 16, 18) den niedrigen Druck in jeder Pulsierkammer (5) während der ersten Melkphase (I) auf einen ersten Wert (p1), wenn der Milchfluß aus den Zitzen schwächer ist als eine vorbestimmte, verhältnismäßig schwache Strömung (q1), und auf einen zweiten Wert (p3) einstellen kann, wenn der Milchfluß mindestens der schwachen Strömung (q1) entspricht, und den niedrigen Druck in jeder Pulsierkammer während der zweiten Melkphase (II) auf dem zweiten Wert (p3) halten kann, wobei die Drucksteuereinrichtungen den Druck in jeder Auskleidung mindestens während der zweiten Melkphase (II) und mindestens während des besagten Teils der dritten Melkphase (III) auf einem vorbestimmten Wert (p4) halten können, welcher vorbestimmte Wert (p4) des Drucks in jeder Auskleidung niedriger als der erste Wert (p1) und höher als oder gleich dem zweiten Wert (p3) ist, und wobei die Drucksteuereinrichtungen (12, 14, 16) den niedrigen Druck in jeder Pulsierkammer auf den ersten Wert (p1) einstellen können, wenn die Meldeeinrichtung (17) während der dritten Melkphase (III) meldet, daß der Milchfluß auf den vorbestimmten Anteil (q2) der Hauptströmung abgefallen ist.

4. Melkmaschine nach einem der Ansprüche 1 bis 3, bei der die Drucksteuereinrichtungen eine erste Einstelleinrichtung (16) zum Einstellen des Druck in jeder Auskleidung (3), eine zweite Einstellvorrichtung (12) zum Einstellen des niedrigen Drucks in jeder Pulsierkammer (5) und eine Steuerung (18) aufweisen, die an die Einstellvorrichtungen und an die Meldeeinrichtung angeschlossen sind, um die Einstellvorrichtungen ansprechend auf Meldungen aus der Meldeeinrichtung anzusteuern.

5. Melkmaschine nach einem der Ansprüche 1 - 4, bei der die Meldeeinrichtung ein Strömungsmelder ist (17).

6. Verfahren zum Melken mittels einer Melkmaschine mit mindestens einem Zitzenbecher (2), der eine Auskleidung (3) zur Aufnahme einer Zitze enthält, wobei die Auskleidung einen inneren milchleitenden Teil (4) aufweist und gemeinsam mit der umgebenden Wandung des Zitzenbechers zwischen dem Zitzenbecher und der Auskleidung eine Pulsierkammer (5) bildet, die beim Melken mit einem pulsierenden Druck beaufschlagt wird, der zwischen einem niedrigeren und einem höheren Druckwert variiert, während der milchleitende Teil des Inneren der Auskleidung konstant mit einem Druck beaufschlagt wird, der niedriger als der Atmosphärendruck und niedriger als der hohe Druckwert in der Pulsierkammer ist, wobei beim Melken der Milchfluß aus den Zitzen in einer anfänglichen ersten Melkphase (I) auf eine Hauptströmung zunimmt, in einer zweiten Melkphase (II) auf der Hauptströmung verbleibt und in einer dritten Melkphase von der Hauptströmung aus abnimmt, **dadurch gekennzeichnet**, daß in der dritten Melkphase (III), wenn der Milchfluß auf einen vorbestimmten Anteil (q2) der Hauptströmung abgesunken ist, mindestens in einem Teil der dritten Melkphase (III) der niedrigere Druck in jeder Pulsierkammer (5) auf einem höheren Wert gehalten wird als der Druck in jeder Auskleidung.

7. Verfahren nach Anspruch 6, bei dem mindestens während der zweiten Melkphase (II) der niedrige Druck in jeder Pulsierkammer (5) niedriger als oder gleich dem Druck in jeder auskleidung ist und während der dritten Melkphase (III), wenn der Milchfluß auf den genannten vorbestimmten Anteil (q2) der Hauptströmung gefallen ist, der niedrige Druck in jeder Pulsierkammer (5) so erhöht wird, daß er den Druck in jeder Auskleidung übersteigt.

8. Verfahren nach Anspruch 7, bei dem der niedrige Druck in jeder Pulsierkammer (5) in der ersten Melkphase (I) auf einem ersten Wert (p1) gehalten wird, wenn der Milchfluß geringer als eine verhältnismäßig schwache Strömung (q1) ist, auf einen zweiten Wert (p3) eingestellt wird, wenn der Milchfluß auf die kleine Strömung (q1) angestiegen ist, und während der zweiten Melkphase (II) auf dem zweiten Wert (p3) gehalten wird, bei dem weiter der Druck in jeder Auskleidung (3) mindestens während der zweiten Melkphase (II) und während eines Teils der dritten Melkphase (III) auf einem vorbestimmten Wert (p4) gehalten wird, welcher vorbestimmte Wert (p4) des Drucks in jeder Auskleidung niedriger als der erste Wert (p1) und höher als der oder gleich dem zweiten Wert (p3) ist, und bei dem in der dritten Melkphase (III) der niedrige Druck in jeder Pulsierkammer (5) auf den ersten Wert (p1) eingestellt wird, wenn der Milchfluß auf den vorbestimmten Anteil (q2) der Hauptströmung abgefallen ist.

**Revendications**

1. Machine à traire comprenant au moins un gobelet trayeur (2) qui renferme un manchon (3) destiné à recevoir un trayon, lequel manchon possède une partie intérieure (4) qui conduit le lait et forme avec la paroi du gobelet trayeur qui l'entoure une chambre de pulsation (5) située entre le gobelet trayeur et le manchon, des moyens (6-8, 9-11, 13-15) destinés à soumettre la partie de l'intérieur de chaque manchon qui conduit le lait à une pression inférieure à la pression atmosphérique, et à soumettre chaque chambre de pulsation à une pression pulsatoire qui varie entre une basse pression et une haute pression, laquelle haute pression est supérieure à la pression régnant à l'intérieur de chaque manchon, des moyens (12, 16, 18) destinés à commander les pressions respectives régnant dans le volume intérieur du manchon et dans la chambre de pulsation de chaque gobelet trayeur, et un moyen (17) destiné à indiquer le débit du lait pendant la traite, le débit de lait qui sort des trayons croissant pendant une première phase initiale (I) de la traite jusqu'à atteindre un débit principal, puis restant au débit principal pendant une seconde phase (2) de la traite, et décroissant à partir du débit principal pendant une troisième phase terminale (III) de la traite, caractérisée en ce que lesdits moyens (12, 16, 18) de commande de la pression sont adaptés pour commander les différentes pressions en réponse au fait que le moyen (17) indicateur de débit indique pendant ladite troisième phase (III) de la traite que le débit de lait est retombé à une fraction prédéterminée du débit principal, de manière que la basse pression régnant dans chaque chambre de pulsation (5) soit supérieure à la pression régnant dans chaque manchon (3), au moins pendant une partie de la troisième phase (III) de la traite.

2. Machine à traire selon la revendication 1, dans laquelle les moyens (12, 16, 18) de commande de la pression sont adaptés pour faire croître la basse pression régnant dans chaque chambre de pulsation (16) en réponse au fait que le moyen indicateur (17) indique pendant la troisième phase (III) de la traite que le débit de lait est retombé à ladite fraction Prédéterminée du débit principal de manière que ladite basse pression excède la pression régnant dans chaque manchon (3).

3. Machine à traire selon la revendication 2, dans laquelle, en réponse au moyen indicateur (17), les moyens (12, 16, 18) de commande de la pression sont adaptés pour régler la basse pression régnant dans chaque chambre de pulsation (5) pendant la première Phase (I) de la traite sur une première valeur (p1) lorsque le débit de lait sortant des trayons est inférieur à un débit prédéterminé (q1) relativement petit et sur une seconde valeur (p3) lorsque le débit de lait est au moins égal audit petit débit (q1) et pour maintenir la basse pression dans chaque chambre de pulsation à ladite seconde valeur (p3) pendant la seconde phase (II) de la traite, les moyens de commande de la pression étant adaptés jour maintenir la Pression régnant dans chaque manchon à une valeur prédéterminée (p4) au moins pendant la seconde phase (II) de la traite et pendant ladite partie de la troisième phase (III) de la traite, laquelle valeur prédéterminée (p4) de la pression régnant dans chaque manchon est inférieure à ladite première valeur (p1) et supérieure ou égale à ladite seconde valeur (p3), et les moyens (12, 16, 18) de commande de la pression sont adaptés pour régler la basse pression régnant dans chaque chambre de pulsation sur ladite première valeur (p1) en réponse au fait que le moyen indicateur (17) indique pendant la troisième phase (III) de la traite que le débit de lait est retombé à ladite fraction prédéterminée (q2) du débit principal.

4. Machine à traire selon une quelconque des revendications 1 à 3, dans laquelle les moyens de commande de la pression comprennent un premier dispositif de réglage (16) destiné à régler la pression régnant dans chaque manchon (3), un second dispositif de réglage (12) destiné à régler la basse pression régnant dans chaque chambre de pulsation (5), et une unité de commande (18) reliée aux dispositifs de réglage et au moyen indicateur pour commander les dispositifs de réglage en réponse aux indications issues du moyen indicateur.

5. Machine à traire selon une quelconque des revendications 1 à 4, dans laquelle le moyen indicateur est constitué par un dispositif capteur de débit (17).

6. Procédé pour traire au moyen d'une machine à traire, comprenant au moins un gobelet trayeur (2) qui contient un manchon (3) destiné à recevoir un trayon, lequel manchon possède une partie intérieure (4) qui conduit le lait et forme avec la paroi du gobelet trayeur qui l'entoure une chambre de pulsation (5) située entre le gobelet trayeur et le manchon, la chambre de pulsation étant soumise pendant la traite à une pression pulsatoire qui varie entre une basse pression et une haute pression, tandis que la partie du volume intérieur du manchon qui conduit le lait est constatent soumise à une pression qui est inférieure à la pression atmosphérique et inférieure à ladite haute pression régnant dans la chambre de pulsation, le débit de lait qui sort des trayons au cours de la traite croissant pendant une première phase initiale (I) de la traite pour atteindre un débit principal, puis restant au débit principal pendant une seconde phase (II) de la traite et décroissant à partir du débit Principal pendant une troisième phase terminale (III) de la traite, caractérisé en ce que, pendant ladite troisième phase (III) de la traite, lorsque le débit de lait est retombé à une fraction prédéterminée (q2) du débit principal, la basse pression régnant dans chaque chambre de pulsation (5) est maintenue supérieure à la pression régnant dans chaque manchon, au moins pendant une partie de la troisième phase (3) de la traite.

7. Procédé selon la revendication 6, dans lequel la basse pression régnant dans chaque chambre de pulsation (5) est inférieure ou égale à la pression régnant dans chaque manchon au moins pendant la seconde phase (II) et, pendant la troisième phase (III) de la traite, lorsque le débit de lait est retombé à ladite fraction prédéterminée (q2) du débit principal, la basse pression régnant dans chaque chambre de pulsation (5) est augmentée de manière à être supérieure à la pression régnant dans chaque manchon.

8. Procédé selon la revendication 7, dans lequel la basse pression régnant dans chaque chambre de pulsation (5) pendant la première phase (I) de la traite est maintenue à une première valeur (p1) lorsque le débit de lait est inférieur à un débit prédéterminé (q1) relativement petit et est réglée sur une seconde valeur (p3) lorsque le débit de lait s'est élevé jusqu'à atteindre ledit petit débit (q1), puis est maintenue à ladite seconde valeur (p3) pendant la seconde phase (II) de la traite, la pression régnant dans chaque manchon (3) est maintenue à une valeur prédéterminée (p4) au moins pendant la seconde phase (II) de la traite et pendant ladite partie de la troisième phase (III) de la traite, laquelle valeur prédéterminée (p4) de la pression régnant dans chaque manchon est inférieure à ladite première valeur (p1) et supérieure ou égale à ladite seconde valeur (p3), et, pendant la troisième phase (III) de la traite, lorsque le débit de lait est retombé à ladite fraction prédéterminée (q2) du débit principal, la basse pression régnant dans chaque chambre de pulsation (5) est réglée sur ladite première valeur (p1).

Fig. 1

**P (KPA)  Q (KG/MIN)**

42 (P3)

50 (P4) — 5

(q2)

58 (P1) — 4

3

66 (P2)

2

1

0,2(q1)

100

I    II    III    t (MIN)

pu

mk

## Fig.2